# EUROPÄISCHE PATENTSCHRIFT

(11) **EP 3 487 804 B1**
(45) Veröffentlichungstag und Bekanntmachung des Hinweises auf die Patenterteilung: **13.05.2020**
(21) Anmeldenummer: 17732923.2
(22) Anmeldetag: 27.06.2017
(51) Int. Cl.: B66F 9/075, B62D 7/15

(54) **FLURFÖRDERZEUG**
INDUSTRIAL TRUCK
CHARIOT DE MANUTENTION

(30) Priorität: 19.07.2016 DE 102016113260
(43) Veröffentlichungstag der Anmeldung: 29.05.2019
(73) Patentinhaber: Hubtex Maschinenbau GmbH & Co. KG, 36041 Fulda (DE)
(72) Erfinder: KELLER, Jürgen, 36137 Grossenlüder (DE)
(74) Vertreter: Kluin, Jörg-Eden
(86) Internationale Anmeldenummer: PCT/EP2017/065841
(87) Internationale Veröffentlichungsnummer: WO 2018/015116

(56) Entgegenhaltungen:
- EP-A1- 2 508 403
- WO-A1-2011/113127
- DE-A1-102012 112 743

## Beschreibung

Die Erfindung betrifft ein Flurförderzeug mit mindestens zwei antreibbaren, in Längsfahrt in verschiedenen Spuren laufenden Rädern, von denen mindestens eines um Lenkwinkel lenkbar ist, und mindestens eines beim Einlenken in eine Kurvenfahrt zunächst innen verläuft, bis das Flurförderzeug beim weiteren Einlenken in eine Karussellfahrt übergeht.

Ein gattungsgemäßes derartiges Flurförderzeug ist aus der DE 10 2012 112 743 A1 bekannt. Bei diesem Flurförderzeug handelt es sich um ein dreirädriges Fahrzeug. Sämtliche Räder sind um etwa senkrecht zu den Radachsen und etwa parallel zueinander verlaufende Lenkachsen lenkbar angeordnet. Das Flurförderzeug umfasst die Fahrprogramme "Längsfahrt" und "Querfahrt". Um zwischen einer Längsfahrt und einer etwa senkrecht hierzu gerichteten Querfahrt wechseln zu können, ist ein Steuerorgan vorgesehen, mittels welchem die den Rädern jeweils zugeordneten Lenkeinrichtungen derart beaufschlagbar sind, dass sich die Räder in einer Neutralstellung des Lenkgebers, beispielsweise eines Lenkrades, in Geradeausstellung in der jeweiligen Fahrtrichtung befinden. Alle Drehachsen der gelenkten Räder verlaufen in dieser Position zumindest im Wesentlichen parallel oder deckungsgleich, mit anderen Worten: Der Lenkpol liegt im Unendlichen.

Sämtliche Räder dieses Fahrzeugs sind über jeweils zugeordnete Antriebseinrichtungen antreibbar. Bei diesen Antriebseinrichtungen kann es sich insbesondere um elektrisch oder hydraulisch betriebene Motoren handeln.

Befindet sich dieses Fahrzeug im Fahrprogramm "Längsfahrt", so laufen zwei seiner Räder hintereinander und zumindest nahezu in ein und derselben ersten Spur. In der zweiten Spur läuft das dritte Rad. Es befindet sich in Längsfahrtrichtung gesehen etwa zwischen den beiden, in der ersten Spur laufenden Rädern und wird somit auch als "Mittelrad" bezeichnet.

Befindet sich dieses Fahrzeug in seiner Längsfahrt, so werden die Lenkeinrichtungen der beiden in der ersten Spur laufenden Räder entsprechend der mit Hilfe des Lenkgebers erzeugten Lenkbefehle gelenkt. Das Mittelrad wird nicht gelenkt.

Wird dieses Flurförderzeug aus der Längsfahrt in eine Kurvenfahrt gelenkt, bei welcher sich das Mittelrad zunächst im Kurveninneren befindet, so reduziert sich gegenüber den kurvenäußeren Rädern seine Drehgeschwindigkeit. Beim Einlenken nähert sich der Lenkpol der beiden in der ersten Spur laufenden Räder immer weiter der Lenkachse des Mittelrades an. Das Mittelrad muss stillstehen, wenn der Lenkpol mit dessen Lenkachse zusammenschellt. Beim weiteren Einlenken, wenn der Lenkpol zwischen das Mittelrad und die in der ersten Spur laufenden Räder gelangt und sich somit das Flurförderzeug um eine zwischen den Rädern liegende Drehachse dreht, sich es somit in einer "Karussellfahrt" befindet, muss sich schließlich das Mittelrad in umgekehrter Richtung drehen. Hierzu wird der Antrieb des mindestens einen, bei einer Kurvenfahrt zunächst innen laufenden Rades, beispielsweise des Mittelrades, bei Erreichen eines bestimmten Lenkwinkels des mindestens einen gelenkten Rades frei geschaltet. Die Wortfolge "bei einer Kurvenfahrt zunächst innen laufenden Rades" soll verdeutlichen, dass dieses Rad beim Einlenken in eine Kurvenfahrt solange innen verläuft, bis der durch die gelenkten Räder definierte Lenkpol zwischen die gelenkten Räder und das innen laufende Rad wandert und das Fahrzeug in eine Karussellfahrt übergeht. Unter "freigeschaltet" ist zu verstehen, dass das zuvor angetriebene Rad nicht mehr mit einem Antriebsmoment beaufschlagt wird. Dies kann bei einem elektromotorischen Antrieb beispielsweise durch Reduzierung oder Unterbrechung der Versorgungsspannung, bei einem hydraulischen Antrieb durch eine Reduzierung oder Unterbrechung der Zufuhr der Hydraulikflüssigkeit bewirkt werden. Alternativ könnte auch ein schaltbarer Freilauf vorgesehen sein, welcher das Rad bei Erreichen des Lenkwinkels von der Antriebseinrichtung trennt.

Zwar wird aufgrund des Freischaltens des bei einer Kurvenfahrt zunächst innen laufenden Rades bei Erreichen des bestimmten Lenkwinkels vermieden, dass es zu einem Radieren der Räder auf dem Untergrund kommt, welches den Verschleiß der Räder erhöhen würde und zu unkontrollierbaren Fahrzustände des Flurförderzeugs führen könnte. Allerdings hat sich in der Praxis gezeigt, dass das bei Erreichen des bestimmten Lenkwinkels erfolgten Freischalten zu einem unerwünschten, spürbaren Rucken des Fahrzeugs führen kann. Auch wurde festgestellt, dass in manchen Fällen das Flurförderzeug seine Karussellfahrt beim Freischalten des zunächst innen laufenden Rades plötzlich beschleunigt.

Aus der EP 2 508 403 A1 ist ein Verfahren zur Fahrgeschwindigkeitsreduzierung bei einer Kurvenfahrt eines Flurförderzeugs bekannt.

Der Erfindung liegt daher die Aufgabe zugrunde, dieses Flurförderzeug hinsichtlich der vorbeschriebenen Nachteile zu verbessern.

Diese Aufgabe wird durch das in Anspruch 1 wiedergegebene Flurförderzeug gelöst.

Das erfindungsgemäße Flurförderzeug weist mindestens zwei antreibbare, in Längsfahrt in verschiedenen Spuren laufende Räder auf, von denen mindestens eines lenkbar ist und mindestens eines bei einer Kurvenfahrt zunächst innen läuft. Ferner ist eine Drehantriebseinrichtung zum Drehantrieb der antreibbaren Räder vorgesehen. Auch weist dieses Flurförderzeug eine Lenkwinkelerfassungseinrichtung zum kontinuierlichen Erfassen des Lenkwinkels oder zum Erfassen eines bestimmten Lenkwinkels des mindestens einen lenkbaren Rades, sowie eine Einrichtung zur Beeinflussung der von der Drehantriebseinrichtung auf die antreibbaren Räder übertragenen Antriebsleistung auf. Die Einrichtung zur Beeinflussung der Antriebsleistung ist mit der Lenkwinkelerfassungseinrichtung vorzugsweise über eine Signalleitung verbunden. Hierdurch kann die Antriebsleistung beim Einlenken einer Kurvenfahrt bei einem bestimmten Lenkwinkel reduziert werden. Ferner sind Mittel zur Unterbrechung und/oder Umkehrung des Antriebs des bei einer Kurvenfahrt zunächst innen laufenden Rades vorgesehen. Es ist gemäß einer ersten Variante eine Zeitverzögerungseinrichtung vorgesehen, mittels welcher nach Erfassung des bestimmten Lenkwinkels nach einer vorgegebenen Verzögerungszeit die Mittel zur Unterbrechung und/oder Umkehrung des Drehsinnes des Antriebs aktivierbar sind. Hierzu ist die Lenkwinkelerfassungseinrichtung vorzugsweise mit den Mitteln zur Unterbrechung und/oder Umkehrung des Drehsinnes des Antriebs verbunden. Oder es ist gemäß einer zweiten Variante eine Leitungssteuerungseinrichtung vorgesehen, mit welcher nach Erfassung des bestimmten Lenkwinkels die Antriebsleistung kontinuierlich reduzierbar und beim Übergang in die Karussellfahrt das zunächst innen laufende Rad freischaltbar oder dessen Drehsinn umkehrbar ist.

Die Drehantriebseinrichtung umfasst eine leistungssteuerbare Hydraulikpumpe und auf die antreibbaren Räder wirkende Hydraulikmotoren, die vorzugsweise von der Hydraulikpumpe - auch "Fahrpumpe" genannt - mit Hydraulikmedium beaufschlagt werden.

Die Hydraulikpumpe ist hydraulisch leistungssteuerbar ausgebildet.

Hierzu ist eine vorzugsweise hydraulische Steuerleitung vorgesehen.

Zur Leistungssteuerung der Hydraulikpumpe ist in die Steuerleitung eine über eine Ansteuereinrichtung in die Steuerleitung einschaltbare Steuerkolbeneinrichtung vorgesehen, die mit der Hydraulikpumpe zur Leistungssteuerung verbunden ist.

Zur Reduzierung der Antriebsleistung beim Einlenken in eine Kurventahrt bei einem bestimmten Lenkwinkel ist eine die Ansteuereinrichtung überbrückende, mit der Steuerleitung verbundene Bypassleitung vorgesehen, die vorzugsweise ein 2/2-Wegeventil und vorzugsweise auch eine Drossel umfasst.

Zusätzlich oder alternativ kann die Ansteuereinrichtung mit der Lenkwinkelerfassungseinrichtung über eine Signalleitung verbunden und derart ausgebildet sein, dass die Steuerkolbeneinrichtung lenkwinkelabhängig kontinuierlich, vorzugsweise proportional mit hydraulischem Steuerdruck beaufschlagbar ist.

Die Erfindung soll nun unter Bezugnahme auf die beigefügten Zeichnungen weiter erläutert werden. Es zeigen:
- Fig. 1: - schematisch - ein Blockdiagramm eines Betriebssystems am Beispiel eines dreirädrigen Flurförderzeugs in Längsfahrt;
- Fig. 2a) bis d): - schematisch - dieses Fahrzeug in Geradeausfahrt sowie in drei verschiedenen Lenksituationen;
- Fig. 3: ein erstes erfindungsgemäßes Ausführungsbeispiel von zum Antrieb des zunächst innen laufenden Rades vorgesehenen Bauteilen in Form eines Hydraulikschaltplans;
- Fig. 4: ein zweites erfindungsgemäßes Ausführungsbeispiel von zum Antrieb des zunächst innen laufenden Rades vorgesehenen Bauteilen in Form eines Hydraulikschaltplans;
- Fig. 5: ein drittes Ausführungsbeispiel von zum Antrieb des zunächst innen laufenden Rades vorgesehenen Bauteilen in Form eines Hydraulikschaltplans;
- Fig. 6: ein viertes Ausführungsbeispiel von zum Antrieb des zunächst innen laufenden Rades vorgesehenen Bauteilen in Form eines Hydraulikschaltplans sowie
- Fig. 7: eine Veranschaulichung einer zeitverzögerten Betätigung eines zwischen einer Fahrpumpe und einem hydraulischen Antriebsmotor eines beim Einlenken in eine Karussellfahrt zunächst innen laufenden Rades vorgesehenen Schaltventils.

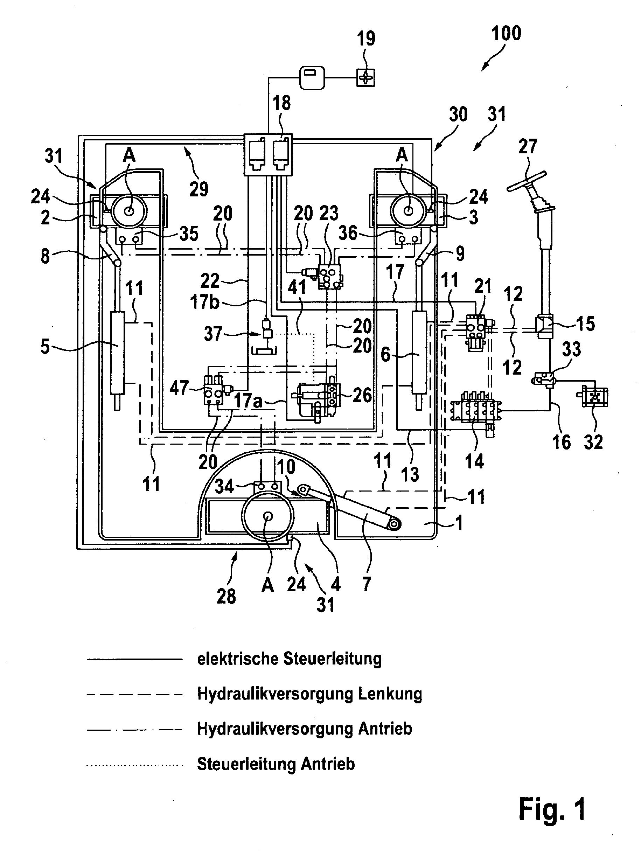

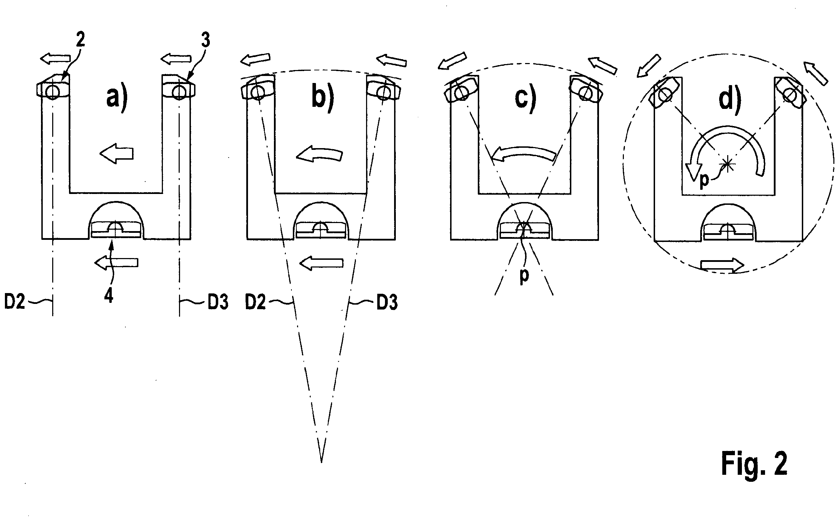

In den Figuren 1 und 2 ist schematisch ein Fahrgestell 1 eines als Ganzes mit 100 bezeichneten Flurförderzeugs dargestellt. Das Flurförderzeug 100 umfasst zwei in Längsfahrtrichtung in einer Spur laufende Räder 2, 3 sowie ein drittes, in einer zweiten Spur laufendes Rad 4. Sämtliche Räder 2, 3, 4 sind um senkrecht zur Zeichenebene verlaufende Achsen A lenkbar angeordnet.

Zum Schwenken der Räder 2, 3, 4 sind jeweils einem der Räder zugeordnete Hydraulikzylinder 5, 6, 7 vorgesehen, die einen Ends an dem Fahrgestell 1, anderen Ends an einem Lenkhebel 8, 9, 10 angelenkt sind.

Jeder Hydraulikzylinder ist über eine Hydraulikleitungen 11 mit einem Lenkblock 21 verbunden. Bei diesem Lenkblock 21 handelt es sich um eine Mehrventilanordnung, die abhängig vom gewählten Lenkprogramm die Hydraulikzylinder 5, 6, 7 mit Hydraulikflüssigkeit versorgt. Über Hydraulikleitungen 12 ist der Lenkblock 21 mit einem Lenkorbitrol 15 verbunden.

Das Lenkorbitrol ist des Weiteren mit einem elektrisch betätigbares Umschaltventil 14 eingeschaltet. Es ist mit einer elektrischen Signalleitung 13 mit einem elektrischen Steuerorgan 18 verbunden, das mit einer Einrichtung zum Speichern der Längs- und Querfahrtprogramme ausgebildet ist. Das Umschaltventil 14 dient dazu, die Räder 2, 3, 4 in Abhängigkeit des jeweils gewählten Fahrprogramms in die Ausgangsposition (bei in der Nullstellung befindlichem Lenkgeber) zu verlagern. In Fig. 1 ist dies die Geradeausstellung in Längsfahrt. Wird das Programm "Querfahrt" gewählt, so sorgen das Umschaltventil 14 und der Lenkblock 21 dafür, dass sämtliche Räder um ihre jeweilige Lenkachse A um 90° verschwenkt werden. Das Umschaltventil 14 ist darüber hinaus über eine Hydraulikleitung 16 mit einem Prioritätsventil 33 verbunden, an welches eine hydraulische Arbeitspumpe 32 angeschlossen ist. Sie dient der Bereitstellung des zur Betätigung der Lenkung und weiterer Aggregate, wie Hebeeinrichtungen des Flurförderzeugs, benötigten Hydraulikmediums. Das Prioritätsventil 33 sorgt dafür, dass vorranging die Lenkungskomponenten versorgt werden, um eine Unterbrechung der Lenkungsfunktion bei gleichzeitiger Betätigung anderer Aggregate zu verhindern.

Der Lenkblock 21 ist darüber hinaus über eine elektrische Steuerleitung 17 mit dem Steuerorgan 18 verbunden. Die Zufuhr oder Abfuhr von Hydraulikflüssigkeit über die Hydraulikleitungen 11 zu beziehungsweise von den Hydraulikzylindern 5, 6, 7 erfolgt Abhängigkeit des Fahrprogramms, welches mit Hilfe einer Eingabeeinrichtung 19 von einem Fahrer ausgewählt worden ist. Ferner kann über die Eingabeeinrichtung die Fahrtrichtung gewählt werden.

An das Steuerorgan 18 ist über eine elektrische Steuerleitung 17a eine hydraulische Fahrpumpe 26 angeschlossen. Sie dient der Bereitstellung von unter Druck befindlicher Hydraulikflüssigkeit, mit welcher hydraulische Antriebsmotoren 34, 35, 36 beaufschlagbar sind, von denen jeweils einer einem angetriebenen Rad zugeordnet ist. Zwischen den Antriebsmotoren 34, 35, 36 und der Fahrpumpe 26 ist ein Fahrblock 23 in die Hydraulikleitungen eingeschaltet, der ebenfalls über eine elektrische Steuerleitung an die Steuereinheit 18 angeschlossen ist. Der Fahrblock 23 verteilt die Hydraulikströme über Hydraulikleitungen 20 auf die Antriebsmotoren 35, 36 der beiden in Längsfahrtrichtung in einer Spur laufenden Räder 2, 3 entsprechend des jeweils gewählten Fahrprogramms. Der Antriebsmotor 34 des dritten Rades 4 ist über ein Schaltventil 47 über Hydraulikleitungen 20 mit der Fahrpumpe 26 verbunden. Das Schaltventil 47 ist wiederum über eine elektrische Steuerleitung 22 an das Steuerorgan 18 angeschlossen. Über eine hydraulische Steuerleitung 41 ist die Fahrpumpe 26 mit einer Ventilanordnung 37 verbunden. Letztere ist über eine elektrische Steuerleitung 17b an das Steuerorgan 18 angeschlossen.

Der Betätigung des Lenkorbitrols 15 dient ein Lenkgeber 27 in Form eines Lenkrades.

An sämtlichen Rädern 2, 3, 4 sind Winkelaufnehmer 24 vorgesehen, die über Signalleitungen 28, 29, 30 mit dem Steuerorgan 18 verbunden sind.

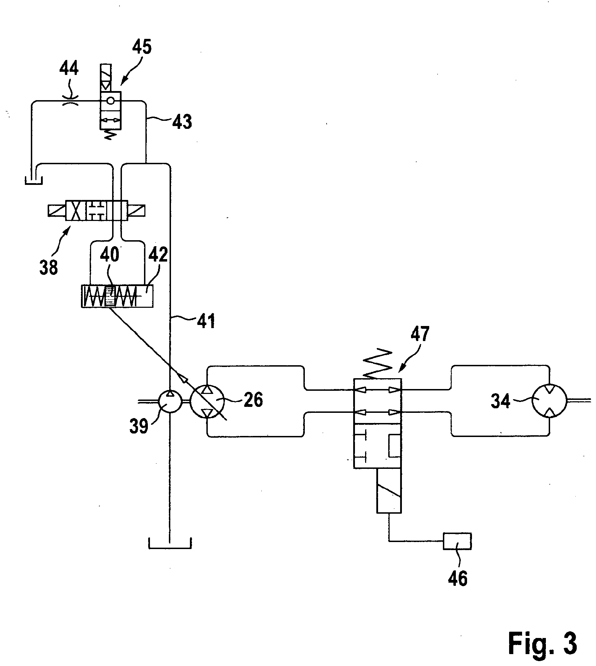

Bei einer Längsfahrt des Flurförderzeugs, die die Erfindung betrifft, werden lediglich die beiden, in einer Spur laufenden Räder 2, 3 lenkbetätigt. Das dritte Rad 4, auch "Mittelrad" genannt, verbleibt ungelenkt. Eine Längsfahrt ist in Fig. 3a durch die eingezeichneten Pfeile symbolisiert. Bei dieser Längsfahrt liegt der Lenkpol im Unendlichen, mit anderen Worten: Die Drehachsen D2, D3 der Räder 2, 3 schneiden sich nicht.

Erfolgt nun eine Lenkbetätigung nach links, wie dies in Fig. 3b symbolisiert ist, so werden die beiden Räder 2, 3 im umgekehrten Drehsinne, jedoch in gleichgroßen Winkeln drehbetätigt, so dass sich die Drehachsen D2, D3 im Lenkpol P schneiden.

Das Flurförderzeug 100 fährt einen Bogen um den Lenkpol P, wobei das Rad 4 nun einen kleineren Weg als die Räder 2, 3 zurücklegen muss. Dieses Rad läuft beim Einlenken somit zunächst innen.

Erhöht man nun den Lenkeinschlag, so wandert der Lenkpol P auf die Lenkachse des Rades 4 zu. Hat er diese erreicht, wie in Fig. 3c dargestellt, so hat das Flurförderzeug das Bestreben, sich um die Lenkachse des Rades 4 zu drehen, d. h. in eine Karussellfahrt überzugehen. Das Rad 4 muss in diesem Augenblick zum Stillstand kommen, wenn ein Radieren gegenüber dem Untergrund vermieden werden soll.

Um den mit einem Radieren der Räder auf dem Untergrund verbundenen erhöhten Verschleiß, sowie unkontrollierte Fahrzustände zu vermeiden, wird beim Einlenken vor dem Übergang in die Karussellfahrt ab einem bestimmten Lenkwinkel die Antriebsleistung reduziert.

Hierzu ist die Ventilanordnung 37 vorgesehen, die an das elektrische Steuerorgan über die Steuerleitung 17b angeschlossen ist. Bei dem in Fig. 3 dargestellten, ersten Ausführungsbeispiel umfasst diese Ventilanordnung 37 eine an das elektrische Steuerorgan 18 angeschlossene Ansteuereinrichtung 38. Sie wird über eine hydraulische Speisepumpe 39 mit Hydraulikmedium beaufschlagt und dient der Auslenkung eines Steuerkolbens 40 mit Hilfe des Hydraulikmediums gegen beidseitig auf dem Kolben wirkende Federkräfte in Abhängigkeit von Signalen, die von dem elektrischen Steuerorgan 18 an die Ansteuereinrichtung 38 übermittelt werden. Der Steuerkolben 40 ist kolbenstangenseitig mit der Fahrpumpe 26 verbunden. Letztere ist so ausgebildet, dass die von ihr bewirkte Förderleistung abhängig ist von der Position des Steuerkolbens 40.

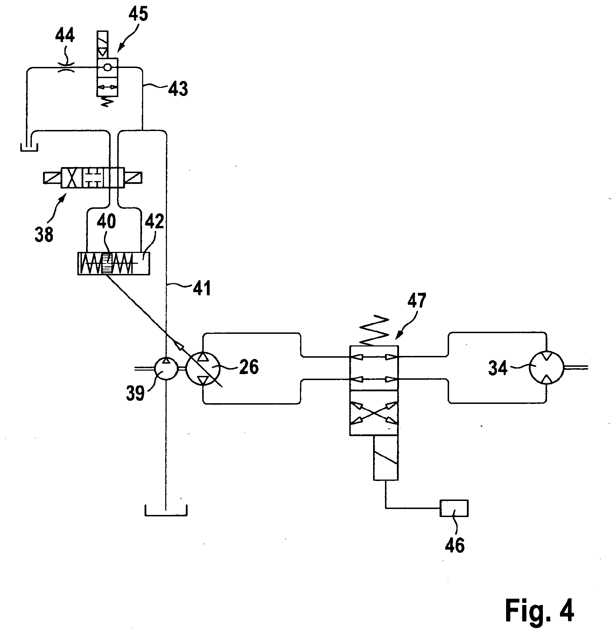

In Fig. 3 (und auch in den weiteren Figuren 4 bis 6, die weitere, unten noch beschriebene Ausführungsbeispiele zeigen) befindet sich der Steuerkolben 40 in einer aus einer mittleren Neutralstellung nach links gegen die Wirkung einer Federkraft verlagerten Position aufgrund eines hydraulischen Drucks, der von der Speisepumpe 39 erzeugt über eine Steuerleitung 41 einer in der Zeichnung rechts dargestellten Zylinderkammer 42 zugeführt ist. Wird nun mit Hilfe einer beispielsweise mit dem gelenkten Rad 2 wirkverbundenen Lenkwinkelerfassungsvorrichtung 31 beim Einlenken ein bestimmter Lenkwinkel erfasst, so sieht - wie bereits weiter oben beschrieben - das erfindungsgemäße Flurförderzeug vor, die Antriebsleistung zu reduzieren. Hierzu ist bei dem in Fig. 3 dargestellten Ausführungsbeispiel ein zur Ansteuereinrichtung parallel geschalteter Bypass 43 vorgesehen. Er umfasst eine hydraulische Drossel 44 und ein mit dieser in Reihe geschaltetes, elektrisch betätigbares 2/2-Wegeventil 45. Es ist betätigungsseitig ebenfalls an die elektrische Steuereinheit 18 angeschlossen.

Bei dem in Fig. 3, sowie den weiteren, in Fig. 4 dargestellten Betriebszuständen ist das 2/2-Wegeventil 45 spannungsbeaufschlagt. Es ist derart ausgebildet, dass es in diesem Zustand den Durchfluss durch den Bypass 43 absperrt. Damit liegt der in der Ansteuerleitung 41 herrschende Druck vollständig in der Zylinderkammer 42 an. Die Fahrpumpe liefert eine Hydraulikleistung, die durch den Druck in der Steuerleitung 41 und die entsprechende Stellung des Kolbens 40 bestimmt ist.

Wird nun mit Hilfe des elektrischen Steuerorgans 18 das 2/2-Wegeventil 45 stromlos geschaltet, was bei Erfassung des bestimmten Lenkwinkels mittels des Steuerorgans 18 bewirkt wird, so wird der Bypass 43 geöffnet und Hydraulikmedium fließt durch diesen unter Überwindung der Drossel 44. Hierdurch sinkt der in der Zylinderkammer 42 an dem Kolben 40 anstehende Druck. Der Kolben verlagert sich federkraftbeaufschlagt in Richtung Neutralstellung, wodurch die Förderleistung der Fahrpumpe 26 und damit die von den Antriebsmotoren bereitgestellte Leistung reduziert wird.

Das Steuerorgan 18 umfasst eine Zeitverzögerungseinrichtung 46. Über diese wird mittels der elektrischen Steuerleitung 22 das Schaltventil 47, welches in den Hydraulikkreislauf zwischen der Fahrpumpe 26 und dem Antriebsmotor 34 des beim Einlenken in eine Kurvenfahrt zunächst innen laufenden Rades 4 eingeschaltet ist, betätigt. Das Schaltventil 47 ist derart ausgebildet, dass es bei Spannungslosschaltung den Antriebsmotor 34 mit der Fahrpumpe 26 verbindet. Wird nun nach Erfassen des bestimmten Lenkwinkels mit der Lenkwinkelerfassungsvorrichtung 31 nach Ablauf der Verzögerungszeit das Schaltventil 47 betätigt, so wird bei dem in Fig. 3 dargestellten Ausführungsbeispiel die Fahrpumpe 26 von dem Antriebsmotor 34 getrennt und dessen Hydraulikkreis kurzgeschlossen, so dass der Antriebsmotor 34 frei drehen kann und damit das Rad 4 frei läuft. Es ist somit vom Antrieb freigeschaltet. Die Verzögerungszeit ist einstellbar und somit an das Fahrverhalten des jeweiligen Fahrzeugs anpassbar. Versuche haben gezeigt, dass Verzögerungszeiten bei dreirädrigen Flurförderzeugen der hier beispielhaft beschriebenen Art im Bereich von Zehntelsekunden regelmäßig geeignet sind, das Fahrverhalten dieser Fahrzeuge zu verbessern.

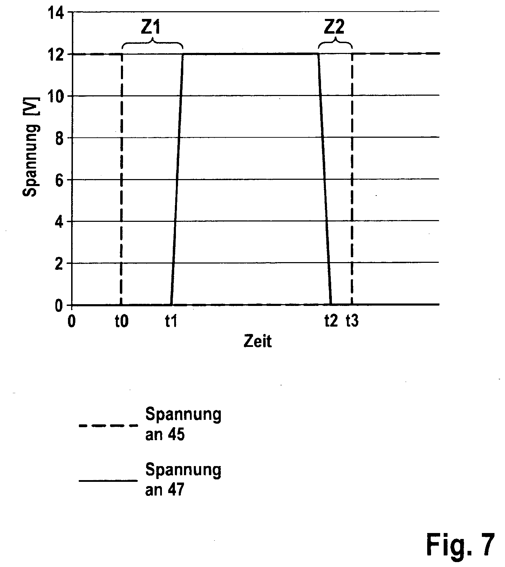

Die zeitlich verzögerte Betätigung des 2/2-Wegeventils 45 und des Schaltventils 47 ist in Fig. 7, in welcher der Verlauf der an diesen Ventilen anstehenden Spannungen schematisch dargestellt ist, verdeutlicht. Dabei ist gestrichelt die an dem 2/2-Wegeventil 45 anliegende Spannung, durchgezogen die an dem Schaltventil 47 anliegende Spannung in Abhängigkeit der Zeit wiedergegeben. Beim Einlenken aus einer Geradeausfahrt liegt an dem 2/2-Wegeventil 45 zunächst die Bestätigungsspannung an. Der Bypass 43 ist somit geschlossen, die von der Fahrpumpe gelieferte Hydraulikleistung somit nicht reduziert. Meldet die Lenkwinkelerfassungseinrichtung 31 dem Steuerorgan 18 das Erreichen des bestimmten Lenkwinkels zum Zeitpunkt to, so wird mittels des Steuerorgans 18 das 2/2-Wegeventil 45 spannungslos geschaltet und somit durch Öffnung des Bypasses 43 die von der Fahrpumpe 26 gelieferte Hydraulikleistung reduziert. Nach Ablauf der von der Zeitverzögerungseinrichtung 46 vorgegebenen Verzögerungszeit Z₁ wird mittels des Steuerorgans 18 das Schaltventil 47 zum Zeitpunkt t₁ spannungsbeaufschlagt und damit der Antriebsmotor 34 des innen laufenden Rades freigeschaltet. Die Spannungsbeaufschlagung beziehungsweise Freischaltung dieses Rades erfolgt für die Dauer der Karussellfahrt. Erfasst zum Zeitpunkt t₂ die Winkelerfassungseinrichtung erneut den bestimmten Lenkwinkel und damit den Übergang von der Karussell- in eine Kurvenfahrt, so wird das Schaltventil 47 erneut stromlos geschaltet. Nach einer Verzögerungszeit Z₂ wird zum Zeitpunkt t₃ das 2/2-Wegeventil 45 erneut spannungsbeaufschlagt und damit die Reduzierung der von der Fahrpumpe 26 gelieferten Hydraulikleistung aufgehoben.

Ein zweites erfindungsgemäßes Ausführungsbeispiel ist in Fig. 4 dargestellt. Es unterscheidet sich von demjenigen in Fig. 3 dargestellten lediglich darin, dass das Schaltventil 47 als Umschaltventil ausgebildet ist, welches bei Spannungsbeaufschlagung die Richtung des Hydraulikstroms, der dem Antriebsmotor 34 zugeführt wird, umschaltet. Anstatt der Freischaltung des Rades 4 erfolgt bei diesem Ausführungsbeispiel somit eine Umkehrung dessen Drehrichtung.

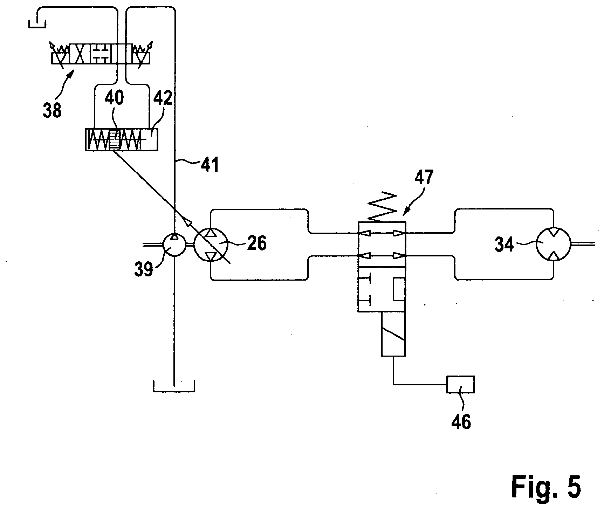

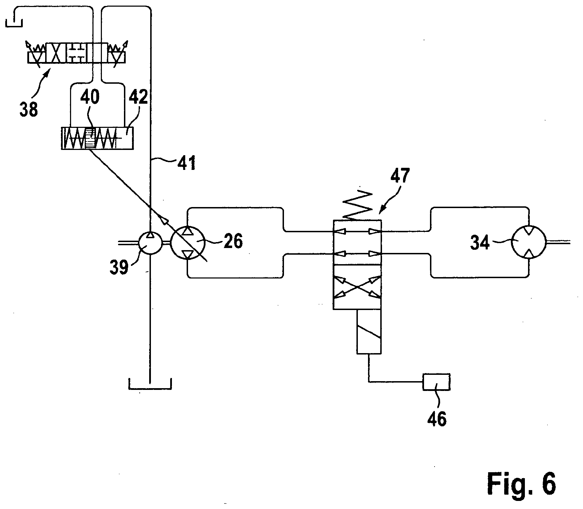

Die in den Figuren 5 und 6 dargestellten, dritten und vierten Ausführungsbeispiele unterscheiden sich von denjenigen anhand von Fig. 3 und 4 erläuterten zunächst darin, dass kein Bypass 43 vorgesehen ist. Stattdessen ist die Ansteuereinrichtung mit Proportionalmagneten ausgerüstet und derart konzipiert, dass der auf dem Steuerkolben wirkende Hydraulikdruck ab Erreichen des bestimmten Lenkwinkels proportional zur weiteren Lenkwinkeländerung variiert wird. Das Flurförderzeug verzögert so beim weiteren Einlenken stetig, bis es in Karussellfahrt übergeht. In diesem Moment erfolgt dann bei dem in Fig. 5 dargestellten Ausführungsbeispiel ein Freischalten des Antriebsmotors 34, beim Ausführungsbeispiel gemäß Fig. 6 ein Umschalten der Drehrichtung des Antriebsmotors 34 in einer den Ausführungsbeispielen gemäß Fig. 4 entsprechenden Weise. Aufgrund der stetigen Verzögerung des Flurförderzeugs bedarf es keiner Zeitverzögerung und auch keiner Zeitverzögerungseinrichtung.

### Bezuaszeichenliste:

- 100: Flurförderzeug
- 1: Fahrgestell
- 2, 3: Räder
- 4: Rad
- 5, 6, 7: Hydraulikzylinder
- 8, 9, 10: Lenkhebel
- 11, 12: Hydraulikleitungen
- 13: elektrische Steuerleitung
- 14: Umschaltventil
- 15: Lenkorbitrol
- 16: Hydraulikleitung
- 17, 17a, 17b: Steuerleitung
- 18: Steuerorgan
- 19: Eingabeeinrichtung
- 20: Hydraulikleitungen
- 21: Lenkblock
- 22: Signalleitung
- 23: Fahrblock
- 24: Winkelaufnehmer
- 26: Fahrpumpe
- 27: Lenkgeber
- 28, 29, 30: Signalleitungen
- 31: Lenkwinkelerfassungsvorrichtung
- 32: Arbeitspumpe
- 33: Prioritätsventil
- 34, 35, 36: Antriebsmotoren
- 37: Ventilanordnung
- 38: Ansteuereinrichtung
- 39: Speisepumpe
- 40: Steuerkolben
- 41: Steuerleitung
- 42: Zylinderkammer
- 43: Bypass
- 44: Drossel
- 45: 2/2-Wegeventil
- 46: Zeitverzögerungseinrichtung
- 47: Schaltventil

- A: Lenkachse
- D2, D3: Drehachsen
- t₀, t₁, t₂, t₃,: Zeitpunkt
- Z₁, Z₂: Verzögerungszeit

## Patentansprüche

1. Flurförderzeug (100),
mit drei Rädern (2, 3, 4), von denen in einer Längsfahrt des Fahrzeugs zwei Räder (2, 3) hintereinander und zumindest nahezu in ein und derselben ersten Spur laufen und das dritte Rad (4) in einer zweiten Spur läuft, wobei die in der ersten Spur laufenden Räder (2, 3) lenkbar sind und das in der zweiten Spur laufende Rad (4) bei einer Kurvenfahrt zunächst innen läuft,
mit einer Drehantriebseinrichtung zum Drehantrieb zumindest eines der in Längsfahrt in der ersten Spur laufenden Räder (2, 3) und des in der zweiten Spur laufenden Rades (4),
mit einer Lenkwinkelerfassungseinrichtung (31) zum kontinuierlichen Erfassen des Lenkwinkels oder zum Erfassen eines bestimmten Lenkwinkels der lenkbaren Räder (2, 3),
mit einer Einrichtung zur Beeinflussung der von der Drehantriebseinrichtung auf die antreibbaren Räder (2, 3; 4) übertragenen Antriebsleistung, und mit Mitteln zur Unterbrechung und/oder Umkehrung des Drehsinns des Antriebs des bei einer Kurvenfahrt zunächst innen laufenden Rades (4), wobei
eine Zeitverzögerungseinrichtung (46) vorgesehen ist, mittels welcher nach Erfassung des bestimmten Lenkwinkels nach einer vorgegebenen Verzögerungszeit die Mittel zur Unterbrechung und/oder Umkehrung des Drehsinnes des Antriebs aktivierbar sind, oder wobei eine Leistungssteuerungseinrichtung vorgesehen ist, mit welcher nach Erfassung des bestimmten Lenkwinkels die Antriebsleistung kontinuierlich reduzierbar und beim Übergang in die Karussellfahrt das zunächst innen laufende Rad (4) freischaltbar oder dessen Drehsinn umkehrbar ist, wobei die Drehantriebseinrichtung eine leistungssteuerbare Hydraulikpumpe (Fahrpumpe 26) umfasst,
wobei die Fahrpumpe (26) hydraulisch leistungssteuerbar ist,
wobei zur Leistungssteuerung der Fahrpumpe (26) eine vorzugsweise hydraulische Steuerleitung (41) vorgesehen ist, in der eine über eine Ansteuereinrichtung (38) in die Steuerleitung einschaltbare Steuerkolbeneinrichtung (40) vorgesehen ist, die mit der Fahrpumpe (26) zur Leistungssteuerung verbunden ist,
**dadurch gekennzeichnet, dass** eine die Ansteuereinrichtung (38) überbrückende, mit der Steuerleitung verbundene Bypassleitung (37) vorgesehen ist, die vorzugsweise ein 2/2-Wegeventil (45) und weiter vorzugsweise eine Drossel (44) umfasst.

2. Flurförderzeug nach Anspruch 1, **dadurch gekennzeichnet, dass** die Drehantriebseinrichtung einen mit dem bei einer Kurvenfahrt zunächst innen laufenden Rad (4) verbundenen ersten Hydraulikmotor (34) umfasst, der von der Fahrpumpe (26) mit Hydraulikmedium beaufschlagbar ist.

3. Flurförderzeug nach Anspruch 2, **dadurch gekennzeichnet, dass** die Drehantriebseinrichtung mindestens einen mit dem mindestens einen weiteren angetriebenen Rad verbundenen zweiten Hydraulikmotor (35, 36) umfasst, der von der Fahrpumpe (26) mit Hydraulikmedium beaufschlagbar ist.

4. Flurförderzeug nach einem der Ansprüche 1 bis 3, **dadurch gekennzeichnet, dass** die Ansteuereinrichtung (38) mit der Lenkwinkelerfassungsvorrichtung (31) über eine Signalleitung verbunden und derart ausgebildet ist, dass die Steuerkolbeneinrichtung (40) lenkwinkelabhängig kontinuierlich, vorzugsweise proportional, mit hydraulischem Steuerdruck beaufschlagbar ist.

## Claims

1. Industrial truck (100) comprising three wheels (2, 3, 4), of which two wheels (2, 3) travel, in a longitudinal movement of the vehicle, one behind the other and at least approximately in the same first lane and the third wheel (4) travels in a second lane, the wheels (2, 3) that travel in the first lane being steerable and the wheel (4) that travels in the second lane traveling inward first when cornering, comprising a rotary drive device for rotating at least one of the wheels (2, 3) that travel in the first lane in the longitudinal movement and the wheel (4) that travels in the second lane, comprising a steering-angle detection device (31) for continuously detecting the steering angle or for detecting a specific steering angle of the steerable wheels (2, 3), comprising a device for influencing the drive power transmitted from the rotary drive device to the drivable wheels (2, 3; 4), and comprising means for interrupting and/or reversing the direction of rotation of the drive of the wheel (4) which travels inward first when cornering, a time delay device (46) being provided, by means of which the means for interrupting and/or reversing the direction of rotation of the drive can be activated after the specific steering angle has been detected after a predetermined delay time, or a power control device being provided, by means of which the drive power can be continuously reduced after the specific steering angle has been detected and, during transition into the carousel travel mode, the wheel (4) which travels inward first can be released or the direction of rotation of said wheel can be reversed, the rotary drive device comprising a power-controllable hydraulic pump (traction pump 26), the traction pump (26) being hydraulically power-controllable, a preferably hydraulic control line (41) being provided in order to control power of the traction pump (26), in which control line a control piston device (40) is provided which can be switched into the control line by means of a control device (38), which control piston device is connected to the drive pump (26) in order to control power, **characterized in that** a bypass line (37) is provided which bridges the control device (38), is connected to the control line and comprises preferably a 2/2-way valve (45) and more preferably a throttle (44).

2. Industrial truck according to claim 1, **characterized in that** the rotary drive device comprises a first hydraulic motor (34) which is connected to the wheel (4) that travels inward first when cornering and can be acted on by the drive pump (26) by means of hydraulic medium.

3. Industrial truck according to claim 2, **characterized in that** the rotary drive device comprises at least one second hydraulic motor (35, 36) which is connected to the at least one further driven wheel and can be acted on by the drive pump (26) by means of hydraulic medium.

4. Industrial truck according to any of claims 1 to 3, **characterized in that** the control device (38) is connected to the steering-angle detection apparatus (31) via a signal line and is designed such that the control piston device (40), depending on the steering angle, can be subjected to hydraulic control pressure continuously, preferably proportionally.

## Revendications

1. Chariot de manutention (100),
comportant trois roues (2, 3, 4), dont deux roues (2, 3) roulent l'une derrière l'autre suivant un déplacement longitudinal du véhicule et au moins presque sur une seule et même première voie, et la troisième roue (4) roule dans une seconde voie, les roues (2, 3) roulant dans la première voie étant orientables et la roue (4) roulant dans la seconde voie tournant d'abord vers l'intérieur lors d'un trajet en virage,
comportant un dispositif d'entraînement rotatif pour faire tourner au moins l'une des roues (2, 3) roulant dans la première voie suivant un déplacement longitudinal et la roue (4) roulant dans la seconde voie,
comportant un dispositif de détection d'angle de braquage (31) pour détecter en continu l'angle de braquage ou pour détecter un angle de braquage spécifique des roues orientables (2, 3),
comportant un dispositif pour influencer la puissance d'entraînement transmise par le dispositif d'entraînement rotatif aux roues entraînables (2, 3 ; 4), et comportant des moyens pour interrompre et/ou inverser le sens de rotation de l'entraînement de la roue (4) tournant d'abord vers l'intérieur lors d'un trajet en virage,
dans lequel un dispositif à retard de temps (46) est prévu, au moyen duquel les moyens pour interrompre et/ou inverser le sens de rotation de l'entraînement peuvent être activés après détection de l'angle de braquage déterminé après un temps de retard prédéterminé, ou dans lequel un dispositif de commande de puissance est prévu, à l'aide duquel la puissance d'entraînement peut être réduite en continu après détection de l'angle de braquage déterminé et, lors de la transition vers la rotation, la roue (4) tournant d'abord vers l'intérieur peut être relâchée ou son sens de rotation peut être inversé,
dans lequel le dispositif d'entraînement rotatif comprend une pompe hydraulique commandée en puissance (pompe de roulement 26),
dans lequel la pompe de roulement (26) peut être commandée hydrauliquement, dans lequel une conduite de commande (41) de préférence hydraulique est prévue pour la commande en puissance de la pompe de roulement (26), conduite de commande dans laquelle un dispositif à piston de commande (40) commutable est disposé par l'intermédiaire d'un dispositif de commande (38), lequel dispositif à piston de commande est relié à la pompe de roulement (26) pour la commande en puissance, **caractérisé en ce qu'**une conduite de dérivation (37) pontant le dispositif de commande (38) et reliée à la conduite de commande est prévue, laquelle conduite de dérivation comprend de préférence une soupape à 2/2 voies (45) et plus préférablement un étrangleur (44).

2. Chariot de manutention selon la revendication 1, **caractérisé en ce que** le dispositif d'entraînement rotatif comprend un premier moteur hydraulique (34) relié à la roue (4) tournant d'abord vers l'intérieur lors d'un trajet en virage, lequel moteur hydraulique peut être soumis, par la pompe de roulement (26), à l'action d'un fluide hydraulique.

3. Chariot de manutention selon la revendication 2, **caractérisé en ce que** le dispositif d'entraînement rotatif comprend au moins un second moteur hydraulique (35, 36) relié à l'au moins une autre roue entraînée, lequel moteur hydraulique peut être soumis, par la pompe de roulement (26), à l'action d'un fluide hydraulique.

4. Chariot de manutention selon l'une des revendications 1 à 3, **caractérisé en ce que** le dispositif de commande (38) est relié au le dispositif de détection d'angle de braquage (31) par l'intermédiaire d'une ligne de signal, et est conçu de telle sorte que le dispositif de piston de commande (40) est soumis en continu, de préférence de façon proportionnelle, à l'action d'un fluide hydraulique en fonction de l'angle de braquage.
